# FASCICULE DE BREVET EUROPEEN

(11) **EP 1 934 081 B1**
(45) Date de publication et mention de la délivrance du brevet: **17.03.2010**
(21) Numéro de dépôt: 06831235.4
(22) Date de dépôt: 27.09.2006
(51) Int. Cl.: B62D 1/18

(54) **DISPOSITIF D'HABILLAGE D'UNE COLONNE DE DIRECTION**
ABDECKUNG FÜR EINE LENKSÄULE
COVER FOR A STEERING COLUMN

(30) Priorité: 30.09.2005 FR 0509987
(43) Date de publication de la demande: 25.06.2008
(73) Titulaire: RENAULT S.A.S., 92100 Boulogne Billancourt (FR)
(72) Inventeur: SAUNIER, Maxime, F-78180 Montigny-le-Bretonneux (FR)
(86) Numéro de dépôt international: PCT/FR2006/050948
(87) Numéro de publication internationale: WO 2007/036675

(56) Documents cités:
- EP-A- 0 838 387
- EP-A- 1 207 093
- DE-U1- 29 624 621
- US-A1- 2003 098 574

## Description

La présente invention se rapporte un dispositif d'habillage d'une colonne de direction d'un véhicule automobile.

Des dispositifs d'habillage connus, permettent déjà, au moyen d'une coquille, d'habiller des colonnes de direction en deux parties mobiles l'une par rapport à l'autre.

En effet, les véhicules automobiles comprennent usuellement un train roulant avec des roues directrices, séparé d'un habitacle, et une planche de bord située dans l'habitacle. Ils sont équipés d'une colonne de direction dont une partie fixe traverse la planche de bord pour rejoindre le train roulant et plus précisément des organes de direction du véhicule automobile, et dont une partie mobile équipée d'un volant, est montée coulissante dans la partie fixe pour pouvoir régler la position dudit volant dans l'habitacle.

La coquille est destinée à masquer la colonne de direction et d'autres organes de commande du véhicule, et surtout à masquer la jonction entre les deux parties de colonne de direction. En outre, la coquille est généralement solidaire de la partie mobile, et elle est donc susceptible d'être entraînée en translation par rapport au plancher ou par rapport à la partie fixe, lorsque le volant est réglé.

Afin de guider cette coquille en translation, il a été imaginé de la monter à l'intérieur d'un fourreau solidaire de la planche de bord ; la coquille étant alors adaptée à être entraînée en translation dans ce fourreau lorsque le volant est réglé.

On pourra notamment se référer au document EP 838 387, qui décrit un tel dispositif d'habillage. Dans ce document, un premier élément d'habillage est monté coulissant dans la planche de bord tandis qu'un second élément d'habillage est monté pivotant par rapport au premier élément.

Cependant, l'un de ses inconvénients, réside en ce qu'il nécessite des éléments complémentaires encombrants venant s'ajuster autour de la coquille pour pouvoir la guider.

Aussi, un problème qui se pose et que vise à résoudre la présente invention, est alors de fournir un dispositif d'habillage dont la coquille soit non seulement susceptible d'être guidée en translation mais aussi, qu'elle puisse l'être sans encombrer la planche de bord.

Le document EP1207093 décrit un dispositif d'habillage dont un premier élément est monté pivotant sur la planche de bord et un second élément est monté coulissant sur le premier élément. Le dispositif de ce document présente pour inconvénient qu'il peut ne s'adapter à la géométrie ou à l'architecture du poste de conduite.

La présente invention propose, selon un premier aspect, un dispositif d'habillage d'une colonne de direction d'un véhicule automobile, ledit véhicule automobile comprenant un groupe motopropulseur et un habitacle séparés l'un de l'autre par une planche de bord, ladite colonne de direction comprenant une partie fixe rejoignant ledit groupe motopropulseur et une partie mobile terminée par un volant de direction, ladite partie fixe étant montée en position fixe à travers ladite planche de bord, tandis que ladite partie mobile est montée coulissante sur ladite partie fixe.

Ledit dispositif d'habillage comprend une coquille pour habiller ladite colonne de direction, ladite coquille pouvant être montée solidaire en translation de ladite partie mobile et entourant au moins partiellement ladite partie mobile et ladite partie fixe.

Ledit dispositif d'habillage comprend en outre des moyens de guidage en translation permettant de guider ladite coquille en translation lorsque ladite partie mobile est entraînée en translation.

Lesdits moyens de guidage sont adaptés à être installés entre ladite partie fixe et ladite coquille pour guider ladite coquille en translation par rapport à ladite partie fixe.

Ainsi, une caractéristique de l'invention réside dans la mise en oeuvre des moyens de guidage, non pas autour de la coquille, mais à l'intérieur de cette dernière, entre elle et la partie fixe de la colonne de direction. De la sorte, il n'est nul besoin de prévoir des éléments encombrants autour de la coquille et intégrés à la planche de bord afin de pouvoir guider cette coquille en translation lorsque l'on procède au réglage du volant.

Selon un mode de mise en oeuvre de l'invention particulièrement avantageux, ladite colonne s'étendant selon une direction donnée, lesdits moyens de guidage comprennent une glissière dans laquelle est engagé un coulisseau, ledit coulisseau étant adapté à coulisser dans ladite glissière sensiblement selon ladite direction donnée. De la sorte, la glissière et le coulisseau, l'un étant monté dans la coquille tandis que l'autre est montée sur la partie fixe, permettent de guider en translation rectiligne, la glissière par rapport à la partie fixe, lorsqu'ils sont engagés l'un dans l'autre. Selon une variante de réalisation de l'invention préférée, ladite glissière est montée dans ladite coquille, tandis que ledit coulisseau est solidaire de ladite partie fixe, de telle sorte que c'est la glissière qui est entraînée en translation par rapport au coulisseau qui lui est engagé à l'intérieur de la glissière. On expliquera plus en détail le mode de fonctionnement du coulisseau et de la glissière dans la description détaillée.

Selon un mode de réalisation de l'invention particulièrement avantageux, ledit coulisseau comporte une pièce profilée comprenant deux ailes inclinées l'une par rapport à l'autre, une aile de fixation solidaire de ladite partie fixe et une aile de liaison terminée par un bord libre renflé, ledit bord libre renflé étant adapté à coopérer avec ladite glissière. Ainsi, alors que l'aile de fixation est maintenue en applique sur la partie fixe, l'aile de liaison s'étend en saillie de la partie fixe et est, de la sorte, adaptée à venir en prise dans la glissière.

Aussi, et de façon particulièrement avantageuse, ladite glissière comporte une pièce en U, ladite pièce en U présentant une embase solidaire de ladite coquille et deux ailes libres en regard entre lesquelles est adapté à venir coulisser ledit coulisseau. En outre, bien que la coquille soit montée de manière à être maintenue en appui vers le coulisseau, ladite pièce en U comporte néanmoins et de façon particulièrement avantageuse, des moyens de retenue élastiques adaptés à emprisonner ledit bord libre renflé après encliquetage. De la sorte, malgré les vibrations et les freinages violents du véhicule ou les chocs, le coulisseau reste en prise dans la glissière pour pouvoir assurer la fonction de guidage en translation de la coquille le long de la partie fixe de la colonne de direction.

Préférentiellement, et ainsi qu'on le décrira ci-après plus en détail, lesdits moyens de retenue élastiques comprennent deux languettes opposées élastiquement déformables, montées respectivement sur les deux ailes en regard et orientées l'une vers l'autre. Ainsi, ces deux languettes élastiquement déformables sont aisément obtenues en moulant d'une seule pièce ladite pièce en U avec les languettes et au surplus, au cours du montage, après avoir installé le coulisseau sur la partie fixe de la colonne de direction, on vient rapporter la glissière de manière à encliqueter le bord libre renflé dans la pièce en U.

Selon un second aspect, l'invention concerne aussi véhicule automobile comprenant un train roulant avec des roues directrices et un habitacle avec une planche de bord, ladite colonne de direction comprenant une partie fixe rejoignant ledit train roulant et une partie mobile terminée par un volant de direction, ladite partie fixe étant montée en position fixe à travers ladite planche de bord, tandis que ladite partie mobile est montée coulissante sur ladite partie fixe, ledit véhicule automobile comprenant un dispositif d'habillage de la colonne de direction, ledit dispositif d'habillage comprenant une coquille pour habiller ladite colonne de direction, ladite coquille étant adaptée à être montée solidaire en translation de ladite partie mobile en entourant au moins partiellement ladite partie mobile et ladite partie fixe, ledit dispositif d'habillage comprenant en outre des moyens de guidage en translation permettant de guider ladite coquille en translation lorsque ladite partie mobile est entraînée en translation ; selon l'invention, ledit dispositif d'habillage est un dispositif d'habillage de la colonne de direction selon ledit premier aspect, lesdits moyens de guidage étant installés entre ladite partie fixe et ladite coquille pour guider ladite coquille en translation par rapport à ladite partie fixe.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en section axiale du dispositif d'habillage conforme à l'invention ;
- la Figure 2, est une vue schématique en section droite selon un plan II-II définit sur la Figure 1 ;
- la Figure 3 est une vue schématique en perspective d'un élément de détail de la Figure 1 ;
- la Figure 4 est une vue schématique de face de l'élément de détail illustré sur la Figure 3 ;
- la Figure 5 est une vue schématique d'un autre élément de détail illustré sur la Figure 2 ; et,
- la Figure 6, est une vue schématique en section droite d'encore un autre élément de détail illustré sur la Figure 5.

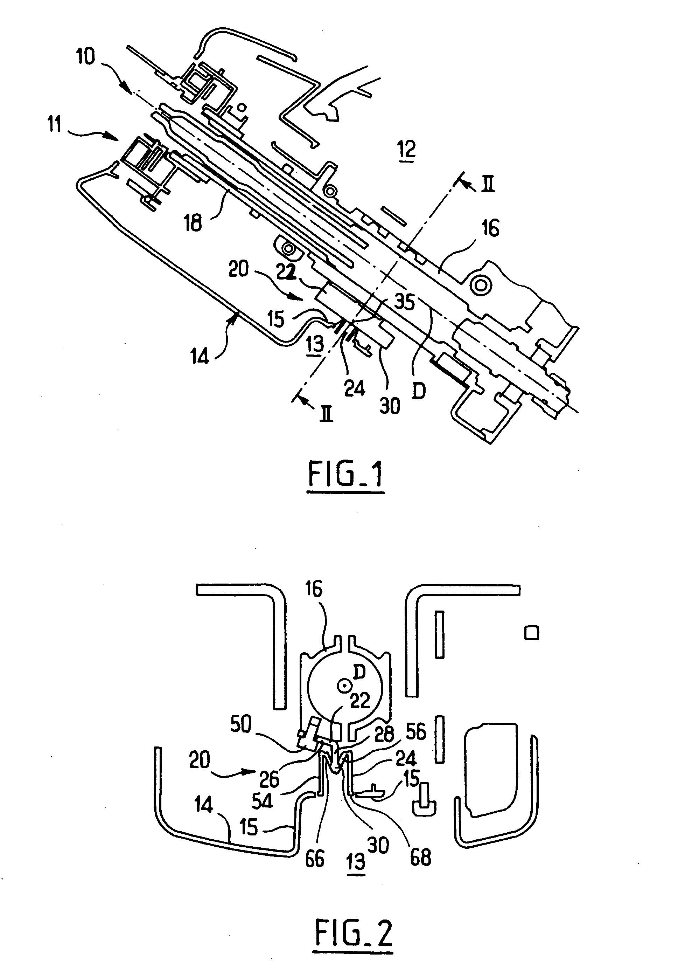

La Figure 1 illustre, selon une section axiale d'une colonne de direction 10 d'un véhicule automobile non représenté, un dispositif d'habillage 11 et une planche de bord 12 ; le dispositif d'habillage 11 comprenant une coquille 14 qui entoure au moins partiellement la colonne de direction 10, laquelle coquille 14 présente un renfoncement 13 pratiqué dans une jupe inférieure 15. La colonne de direction 10 comporte une partie fixe 16 et une partie mobile 18 ; la partie mobile 18, dont est solidaire la coquille 14, étant montée à coulissement dans la partie fixe 16. Cette partie mobile 18 est terminée par un volant de direction non représenté, situé dans l'habitacle. La partie fixe 16 est, elle, montée en position fixe à travers la planche de bord 12 pour rejoindre des organes de direction non représentés d'un train roulant avant dudit véhicule automobile. Il s'agit ainsi, de pouvoir régler la position relative de la partie mobile 18 par rapport à la partie fixe 16 selon une direction longitudinale D de la colonne de direction 10 et de la sorte ajuster la position du volant dans l'habitacle. Des moyens de blocage non représentés de la partie mobile 18 par rapport à la partie fixe 16 sont adaptés à les maintenir ensemble.

Par ailleurs, le dispositif d'habillage 11 comprend des moyens de guidage en translation 20 de la coquille 14 par rapport à la partie fixe 16, qui permettent de guider la coquille en translation selon la direction longitudinale D lorsque la partie mobile 18 est réglée.

Les moyens de guidage en translation 20 comportent une pièce 22, par exemple sous forme d'un profilé, formant coulisseau, appelé ci-après pièce profilée 22, solidaire de la partie fixe 16, et une pièce en U 24 formant glissière avec laquelle vient coopérer la pièce profilée 22.

On retrouve sur la Figure 2, en section droite, la partie fixe 16 de la colonne de direction 10, la coquille 14 qui entoure partiellement la partie fixe 16 et les moyens de guidage en translation 20 incluant la pièce profilée 22 et la pièce en U 24, cette dernière étant solidaire de la jupe inférieure 15.

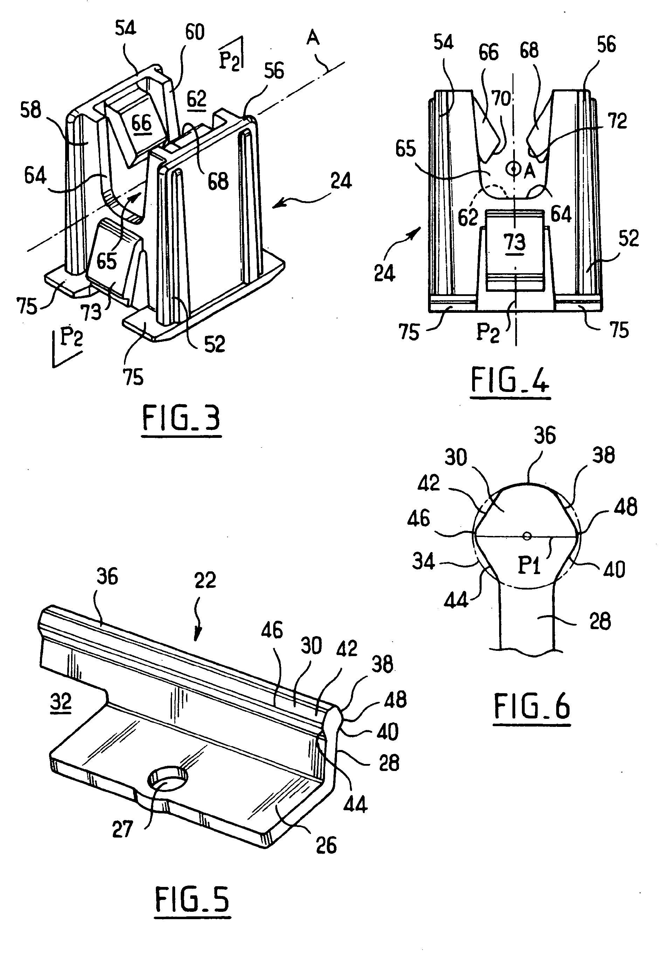

On détaillera tout d'abord la pièce profilée 22 en référence à la Figure 5 où elle est montrée en perspective. Cette pièce profilée 22 présente, deux ailes d'une largeur voisine et inclinées l'une de l'autre d'un angle voisin de 90° ; une aile de fixation 26 dans laquelle est pratiqué un perçage 27 pour pouvoir être maintenue en applique sur la partie fixe 16 précitée, et une aile de liaison 28 terminée par un bord libre renflé 30. Par ailleurs, la pièce profilée 22 présente une entaille 32 ménagée essentiellement dans l'aile de fixation 26.

En outre, le bord libre renflé 30 que l'on retrouve illustré en détail sur la Figure 6, et en coupe droite, présente une section symétrique sensiblement hexagonale qu'un cercle 34 circonscrit, dont l'une des faces 36 est opposée au corps de l'aile de liaison 28 et dont quatre autres faces 38, 40, 42, 44 définissent deux à deux, deux arrêtes diamétralement opposées 46, 48 qui définissent, elles, un plan P₁ sensiblement perpendiculaire audit corps de l'aile de liaison 28.

Ainsi, en se référant de nouveau à la Figure 2, on retrouve la pièce profilée 22 dont l'aile de fixation 26 est maintenue en position fixe et en applique contre la partie fixe 16, grâce à une vis 50 traversant le perçage 27 et qui est vissée dans la partie fixe 16. En outre, la pièce profilée 22 est montée de façon que l'aile de liaison 28 s'étende en saillie, sensiblement radialement, dans une direction opposée à la partie fixe 16 et surtout, de façon que le bord libre renflé 30 s'étende parallèlement à la direction longitudinale D de la colonne de direction 10 et vienne coopérer avec la pièce en U 24. On décrira ci-après le mode de coopération de l'aile de liaison 28 et de la pièce en U 24 après avoir décrit précisément cette pièce en U 24 en référence aux Figures 3 et 4.

On retrouve ainsi, sur cette Figure 3, la pièce en U 24 constituée d'une embase 52 et de deux ailes libres en regard 54, 56 symétriques l'une de l'autre par rapport à un plan P₂. En outre, les deux ailes libres 54, 56 sont reliées ensemble par deux entretoises opposées 58, 60 dans lesquelles sont ménagées respectivement deux encoches en regard 62, 64 ; les deux encoches 62, 64 définissant alors une rainure 65, ou glissière, d'axe de symétrie A, s'étendant entre les deux ailes libres 54, 56. Par ailleurs, la pièce en U 24 comporte deux languettes en regard élastiquement déformables 66, 68 qui s'étendent respectivement depuis l'extrémité des ailes libres en regard 54, 56, dans la rainure 65 et en convergeant l'une vers l'autre et vers l'embase 52.

On retrouve sur la Figure 4 la pièce en U 24, vue dans l'axe A de la rainure 65, les deux ailes libres en regard 54, 56 équipées respectivement de leur languette 66, 68 en regard. Les languettes 66, 68 présentent chacune une extrémité libre d'appui 70, 72 inclinées l'une par rapport à l'autre symétriquement par rapport au plan P₂ de manière à refermer partiellement la rainure 65.

Par ailleurs, et de façon particulièrement avantageuse la pièce en U 24 est moulée d'une seule pièce en matière plastique de telle sorte que les languettes 66, 68 sont naturellement élastiquement rétractables vers leurs ailes libres respectives 54, 56. En outre, il est prévu deux languettes de fixation 73 et deux platines de fixation 75 dans l'embase 52. Les deux platines de fixation 75 s'étendent en saillie des ailes libres 54, 56 pour former un épaulement tandis que les languettes de fixation 73 s'étendent de façon inclinée vers l'épaulement, de manière à pouvoir fixer par encliquetage la pièce en U 24 dans une découpe pratiquée dans la coquille 14. L'embase 52 étant alors solidaire de la paroi de la coquille 14, tandis que les deux ailes libres 54, 56 s'étendent en saillie de la paroi de la coquille 14 vers l'intérieur de la jupe 15.

Ainsi, grâce à son bord libre renflé 30, l'aile de liaison 28, illustrée sur les Figures 5 et 6, est adaptée à venir en prise dans la pièce en U 24. Elle est adaptée à être engagée entre les deux ailes libres 54, 56 de la pièce en U 24 dans la rainure 65 de façon que le bord libre renflé 30 vienne en appui contre le bord des deux encoches 62, 64 dans le fond de la rainure 65 et y soit emprisonné par les deux languettes 66, 68 qui après s'être écartées l'une de l'autre pour autoriser le passage du bord libre renflé 30, reprennent leur position de repos, dans laquelle leurs extrémités libres d'appui 70, 72 sont respectivement en appui contre les faces 44, 40 de la section hexagonale du bord libre renflé 30.

En se référant à la Figure 2, on retrouve ainsi l'aile de liaison 28 en prise dans la pièce en U 24, de telle sorte que, la coquille 14 qui est solidaire de la pièce en U 24, grâce à son embase 52 encliquetée dans la paroi de la coquille 14, est retenue par la pièce profilée 22 à la partie fixe 16, bien évidemment dans la limite de déformation élastique des languettes 66, 68.

En revanche, le bord libre renflé 30, qui est aligné sensiblement selon l'axe de symétrie A, peut coulisser librement à l'intérieur de la rainure 65, entre les deux ailes libres 54, 56 selon cet axe de symétrie A et sensiblement parallèlement à la direction longitudinale D de la colonne de direction 10.

Plus précisément, et ainsi que l'illustre la Figure 1, c'est la pièce en U 24 dont est solidaire la coquille 14 qui est mobile en translation selon la direction longitudinale D de la colonne 10, par rapport à la pièce profilée 22, qui est solidaire, elle, de la partie fixe 16 de la colonne de direction 10 ; le bord libre renflé 30 coulissant alors dans la rainure 35 de la pièce en U 24. Bien évidemment, on comprend que le guidage en translation de la coquille 14 ne peut se faire que sur une course limitée, correspondant à la longueur du bord libre renflé 30. Aussi, la longueur du bord libre renflé 30 correspond au moins, à l'amplitude des possibilités de réglage du volant.

## Revendications

1. Dispositif d'habillage d'une colonne de direction (10) d'un véhicule automobile, ladite colonne de direction (10) s'étendant selon une direction donnée, ledit véhicule automobile comprenant un train roulant avec des roues directrices et un habitacle avec une planche de bord (12), ladite colonne de direction (10) comprenant une partie fixe (16) rejoignant ledit train roulant et une partie mobile (18) terminée par un volant de direction, ladite partie fixe (16) étant montée en position fixe à travers ladite planche de bord (12), tandis que ladite partie mobile (18) est montée coulissante sur ladite partie fixe (16), ledit dispositif d'habillage comprenant une coquille (14) pour habiller ladite colonne de direction (10), ladite coquille étant adaptée à être montée solidaire en translation de ladite partie mobile (18) en entourant au moins partiellement ladite partie mobile (18) et ladite partie fixe (16), ledit dispositif d'habillage comprenant en outre des moyens de guidage en translation (20) permettant de guider ladite coquille (14) en translation lorsque ladite partie mobile (18) est entraînée en translation ;
**caractérisé en ce que** lesdits moyens de guidage (20) sont adaptés à être installés entre ladite partie fixe (16) et ladite coquille (14) pour guider ladite coquille (14) en translation par rapport à ladite partie fixe (16), lesdits moyens de guidage (20) comprennent une glissière (24) dans laquelle est engagé un coulisseau (22), ladite glissière (24) comportant une pièce en U, ladite pièce en U présentant une embase (52) solidaire de ladite coquille (14) et deux ailes libres en regard (54, 56), ledit coulisseau (22) étant adapté à coulisser entre lesdites ailes libres (54, 56) sensiblement selon ladite direction donnée.

2. Dispositif d'habillage selon la revendication 1, **caractérisé en ce que** ladite glissière (24) est montée dans ladite coquille (14), tandis que ledit coulisseau (22) est solidaire de ladite partie fixe (16).

3. Dispositif d'habillage selon la revendication 1 ou 2, **caractérisé en ce que** ledit coulisseau (22) comporte une pièce profilée comprenant deux ailes inclinées l'une par rapport à l'autre, une aile de fixation (26) solidaire de ladite partie fixe (16) et une aile de liaison (28) terminée par un bord libre renflé (30), ledit bord libre renflé (30) étant adapté à coopérer avec ladite glissière (24).

4. Dispositif d'habillage selon la revendication 3, **caractérisé en ce que** ladite pièce en U (24) comporte des moyens de retenue élastiques (66, 68) adaptés à emprisonner ledit bord libre renflé (30) après encliquetage.

5. Dispositif d'habillage selon la revendication 4, **caractérisé en ce que** lesdits moyens de retenue élastiques comprennent deux languettes opposées élastiquement déformables (66, 68), montées respectivement sur les deux ailes en regard (54, 56) et orientées l'une vers l'autre.

6. Véhicule automobile comprenant un train roulant avec des roues directrices et un habitacle avec une planche de bord (12), ladite colonne de direction (10) comprenant une partie fixe (16) rejoignant ledit train roulant et une partie mobile (18) terminée par un volant de direction, ladite partie fixe (16) étant montée en position fixe à travers ladite planche de bord (12), tandis que ladite partie mobile (18) est montée coulissante sur ladite partie fixe (16), ledit véhicule automobile comprenant un dispositif d'habillage de la colonne de direction (10), ledit dispositif d'habillage comprenant une coquille (14) pour habiller ladite colonne de direction (10), ladite coquille étant adaptée à être montée solidaire en translation de ladite partie mobile (18) en entourant au moins partiellement ladite partie mobile (18) et ladite partie fixe (16), ledit dispositif d'habillage comprenant en outre des moyens de guidage en translation (20) permettant de guider ladite coquille (14) en translation lorsque ladite partie mobile (18) est entraînée en translation ;
**caractérisé en ce que** ledit dispositif d'habillage est un dispositif d'habillage de la colonne de direction (10) selon l'une quelconque des revendications 1 à 5, lesdits moyens de guidage (20) étant installés entre ladite partie fixe (16) et ladite coquille (14) pour guider ladite coquille (14) en translation par rapport à ladite partie fixe (16).

## Claims

1. Cover for a motor vehicle steering column (10), said steering column (10) extending in a given direction, said motor vehicle comprising a wheel-axle unit with steerable wheels and a passenger compartment with an instrument panel (12), said steering column (10) comprising a fixed portion (16) connected to said wheel-axle unit and a mobile portion (18) terminated by a steering wheel, said fixed portion (16) being mounted in fixed position through said instrument panel (12), while said mobile portion (18) is slidingly mounted on said fixed portion (16), said cover comprising a shell (14) for covering said steering column (10), said shell being adapted to be mounted on and fastened in translation to said mobile portion (18) at least partially surrounding said mobile portion (18) and said fixed portion (16), said cover further comprising translation guide means (20) for guiding movement of said shell (14) in translation when said mobile portion (18) is moved in translation;
**characterized in that** said guide means (20) are adapted to be installed between said fixed portion (16) and said shell (14) to guide movement of said shell (14) in translation relative to said fixed portion (16), said guide means (20) comprise a slideway (24) in which a sliding member (22) is engaged, said slideway (24) including a U-shaped member, said U-shaped member having a base (52) fastened to said shell (14) and two facing free flanges (54, 56), said sliding member (22) being adapted to slide between said free flanges (54, 56) substantially in said given direction.

2. Cover according to Claim 1, **characterized in that** said slideway (24) is mounted in said shell (14), while said sliding member (22) is fastened to said fixed portion (16).

3. Cover according to Claim 1 or 2, **characterized in that** said sliding member (22) includes a profiled member comprising two flanges inclined one relative to the other, a fixing flange (26) fastened to said fixed portion (16) and a connecting flange (28) terminated by an enlarged free edge (30), said enlarged free edge (30) being adapted to cooperate with said slideway (24).

4. Cover according to Claim 3, **characterized in that** said U-shaped member (24) includes elastic retaining means (66, 68) adapted to trap said enlarged free edge (30) after clipping.

5. Cover according to Claim 4, **characterized in that** said elastic retaining means comprise two opposed elastically deformable tongues (66, 68) mounted on the two facing flanges (54, 56), respectively, and oriented one toward the other.

6. Motor vehicle comprising a wheel-axle unit with steerable wheels and a passenger compartment with an instrument panel (12), said steering column (10) comprising a fixed portion (16) connected to said wheel-axle unit and a mobile portion (18) terminated by a steering wheel, said fixed portion (16) being mounted in fixed position through said instrument panel (12), while said mobile portion (18) is slidingly mounted on said fixed portion (16), said motor vehicle comprising a cover for the steering column (10), said cover comprising a shell (14) for covering said steering column (10), said shell being adapted to be mounted on and fastened in translation to said mobile portion (18) at least partially surrounding said mobile portion (18) and said fixed portion (16), said cover further comprising translation guide means (20) for guiding movement of said shell (14) in translation when said mobile portion (18) is moved in translation;
**characterized in that** said cover is a cover for the steering column (10) according to any one of Claims 1 to 5, said guide means (20) being installed between said fixed portion (16) and said shell (14) to guide movement of said shell (14) in translation relative to said fixed portion (16).

## Patentansprüche

1. Abdeckvorrichtung für eine Lenksäule (10) eines Kraftfahrzeugs, wobei sich die Lenksäule (10) entlang einer gegebenen Richtung erstreckt, wobei das Kraftfahrzeug ein Fahrgestell mit gelenkten Rädern und einen Innenraum mit einem Armaturenbrett (12) umfasst, wobei die Lenksäule (10) einen feststehenden Teil (16), der mit dem Fahrgestell verbunden ist, und einen beweglichen Teil (18), der mit einem Lenkrad abschließt, umfasst, wobei der feststehende Teil (16) in einer festen Position durch das Armaturenbrett (12) angebracht ist, während der bewegliche Teil (18) verschiebbar an dem feststehenden Teil (16) angebracht ist, wobei die Abdeckvorrichtung eine Schale (14) umfasst, um das Lenkrad (10) abzudecken, wobei die Schale dazu ausgeführt ist, translationsfest mit dem beweglichen Teil (18) an diesem angebracht zu werden, indem sie den beweglichen Teil (18) und den feststehenden Teil (16) zumindest teilweise umgibt, wobei die Abdeckvorrichtung des Weiteren Translationsführungsmittel (20) umfasst, die gestatten, die Schale (14) translatorisch zu führen, während der bewegliche Teil translatorisch angetrieben wird;
**dadurch gekennzeichnet, dass** die Führungsmittel (20) dazu ausgeführt sind, zwischen dem feststehenden Teil (16) und der Schale (14) installiert zu werden, um die Schale (14) bezüglich des feststehenden Teils (16) translatorisch zu führen, wobei die Führungsmittel (20) eine Gleitschiene (24) umfassen, in der ein Schieber (22) eingreift, wobei die Gleitschiene (24) ein U-förmiges Stück aufweist, wobei das U-förmige Stück eine Basis (52), die fest mit der Schale (14) verbunden ist, und zwei freie, einander gegenüberliegende Schenkel (54, 56) aufweist, wobei der Schieber (22) dazu ausgeführt ist, im Wesentlichen entlang der gegebenen Richtung zwischen den freien Schenkeln (54, 56) zu gleiten.

2. Abdeckvorrichtung nach Anspruch 1, **dadurch gekennzeichnet, dass** die Gleitschiene (24) in der Schale (14) angebracht ist, während der Schieber (22) fest mit dem feststehenden Teil (16) verbunden ist.

3. Abdeckvorrichtung nach Anspruch 1 oder 2, **dadurch gekennzeichnet, dass** der Schieber (22) ein Profilteil aufweist, das zwei Schenkel umfasst, die bezüglich einander geneigt sind, einen Befestigungsschenkel (26), der fest mit dem feststehenden Teil (16) verbunden ist, und einen Verbindungsschenkel (28), der mit einem wulstförmigen freien Rand (30) abschließt, wobei der wulstförmige freie Rand (30) dazu ausgeführt ist, mit der Gleitschiene (24) zusammenzuwirken.

4. Abdeckvorrichtung nach Anspruch 3, **dadurch gekennzeichnet, dass** das U-förmige Teil (24) elastische Haltemittel (66, 68) aufweist, die dazu ausgeführt sind, den wulstförmigen freien Rand (30) nach dem Einrasten festzusetzen.

5. Abdeckvorrichtung nach Anspruch 4, **dadurch gekennzeichnet, dass** die elastischen Haltemittel zwei einander gegenüberliegende, elastisch verformbare Laschen (66, 68) umfassen, die jeweils an den beiden einander gegenüberliegenden Schenkeln (54, 56) angebracht und zueinander ausgerichtet sind.

6. Kraftfahrzeug, das ein Fahrgestell mit gelenkten Rädern und einen Innenraum mit einem Armaturenbrett (12) umfasst, wobei die Lenksäule (10) einen feststehenden Teil (16), der mit dem Fahrgestell verbunden ist, und einen beweglichen Teil (18), der mit einem Lenkrad abschließt, umfasst, wobei der feststehende Teil (16) in einer festen Position durch das Armaturenbrett (12) angebracht ist, während der bewegliche Teil (18) verschiebbar an dem feststehenden Teil (16) angebracht ist, wobei das Kraftfahrzeug eine Abdeckvorrichtung für die Lenksäule (10) aufweist, wobei die Abdeckvorrichtung eine Schale (14) umfasst, um das Lenkrad (10) abzudecken, wobei die Schale dazu ausgeführt ist, translationsfest mit dem beweglichen Teil (18) an diesem angebracht zu werden, indem sie den beweglichen Teil (18) und den feststehenden Teil (16) zumindest teilweise umgibt, wobei die Abdeckvorrichtung des Weiteren Translationsführungsmittel (20) umfasst, die gestatten, die Schale (14) translatorisch zu führen, während der bewegliche Teil translatorisch angetrieben wird;
**dadurch gekennzeichnet, dass** die Abdeckvorrichtung eine Abdeckvorrichtung für die Lenksäule (10) nach einem der Ansprüche 1 bis 5 ist, wobei die Führungsmittel (20) zwischen dem feststehenden Teil (16) und der Schale (14) installiert sind, um die Schale (14) bezüglich des feststehenden Teils (16) translatorisch zu führen.
